# EUROPÄISCHE PATENTSCHRIFT

(11) **EP 4 279 262 B1**
(45) Veröffentlichungstag und Bekanntmachung des Hinweises auf die Patenterteilung: **11.11.2026**
(21) Anmeldenummer: 23173844.4
(22) Anmeldetag: 17.05.2023
(51) Int. Cl.: B32B 7/03, B32B 3/08, B32B 3/14, B32B 3/18, B32B 7/12, B32B 21/04, B32B 21/13, B32B 21/14

(54) **WERKSTOFFPLATTE**
MATERIAL BOARD
PANNEAU DE MATÉRIAU

(30) Priorität: 17.05.2022 DE 102022204906
(43) Veröffentlichungstag der Anmeldung: 22.11.2023
(73) Patentinhaber: DOKA GmbH, 3300 Amstetten (AT)
(72) Erfinder: MAURITZ, Raimund, 3300 Amstetten (AT); STRANNER, Jürgen, 9861 Eisentratten (AT)
(74) Vertreter: SONN Patentanwälte GmbH & Co KG

(56) Entgegenhaltungen:
- WO-A1-2011/141171
- DE-A1- 102017 113 368
- DE-A1- 2 501 093
- DE-A1- 3 014 018
- DE-U1- 9 213 183

## Beschreibung

Die Erfindung betrifft ein Werkstoffplatte, die sich entlang einer Plattenebene erstreckt, aufweisend zumindest eine Holzlage, wobei jede der zumindest einen Holzlage sich in einer zur Plattenebene parallelen Lagenebene erstreckt und erste Holzstreifen mit einer ersten Faserrichtung und zweite Holzstreifen mit einer zweiten Faserrichtung aufweist, wobei sich die ersten Holzstreifen und die zweiten Holzstreifen in der jeweiligen Holzlage parallel zu einer zur Lagenebene senkrechten Streifenebene der jeweiligen Holzlage erstrecken, wobei die erste Faserrichtung winkelig zu einer Normalen auf die Lagenebene angeordnet ist, wobei die zweite Faserrichtung normal zur Lagenebene ist. Außerdem betrifft die Erfindung ein Rahmenschalungselement und ein Verfahren zur Herstellung einer Werkstoffplatte, die sich entlang einer Plattenebene erstreckt, aufweisend zumindest die Schritte:
- Vorsehen eines Stapels von sich jeweils parallel zu einer Streifenebene des Stapels erstreckenden ersten Holzstreifen mit einer ersten Faserrichtung und zweiten Holzstreifen mit einer zweiten Faserrichtung, wobei die zweite Faserrichtung parallel zur Streifenebene des Stapels ist und die erste Faserrichtung winkelig zur zweiten Faserrichtung angeordnet ist;
- Abspalten zumindest einer Holzlage von dem Stapel, wobei eine Abtrennung vom Stapel entlang einer Abtrennungsebene erfolgt, die senkrecht zur Streifenebene des Stapels und senkrecht zur zweiten Faserrichtung ist, sodass eine Streifenebene der jeweiligen Holzlage normal zu einer Lagenebene, in der sich die jeweilige Holzlage erstreckt, ist, wobei sich die ersten Holzstreifen und die zweiten Holzstreifen parallel zu der Streifenebene der jeweiligen Holzlage erstrecken;
- Vorsehen der zumindest einen Holzlage derart, dass die Lagenebene der zumindest einen Holzlage parallel zur Plattenebene der herzustellenden Werkstoffplatte ist.

Im Stand der Technik werden für verschiedenste Anwendungen Sperrholzplatten verwendet, bei denen die Fasern übereinander liegender Holzlagen jeweils im Winkel von 90° zueinander stehen. Die Faserrichtungen erstrecken sich jeweils parallel zur Plattenebene. Die Neigung zur Schrumpfung oder Ausdehnung z.B. bei Änderung der Umgebungsfeuchte ist in Faserrichtung sehr gering. Dadurch sind Sperrholzplatten in Längs- und Querrichtung (d.h. in der Plattenebene) abgesperrt und weisen in diesen Richtungen kaum Quellung auf. Holz quillt vor allem quer zur Faserrichtung. Damit weisen Sperrholzplatten in der Dickenrichtung ein starkes Quellverhalten auf.

Sperrholzplatten können beispielsweise bei Rahmenschalungen verwendet werden. Da sich die Maße des Metallrahmens im Laufe der Zeit nicht wesentlich verändern, die Sperrholzplatten jedoch schon, sind die Platten nach einiger Zeit nicht mehr bündig mit dem Metallrahmen angeordnet. Daher müssen die Platten dünner eingebaut werden, was jedoch dazu führt, dass die Platte hinter dem Rahmen zurücksteht und ein Rahmenabdruck nach dem Ausschalen sichtbar ist bzw. ein Sprung im Beton vorliegt. Auch wenn der Rahmenabdruck nur eine Abhebung von etwa 1/10 mm aufweisen könnte, ist diese dennoch problematisch, da beispielsweise der Beton an dieser Stelle ausbrechen kann oder ein Fenster- oder Türrahmenausschnitt nicht ganz eben ist und somit Wasser eintreten kann.

Bei Sperrholzplatten erstrecken sich die Furniere parallel zur Plattenebene der Sperrholzplatten. Nachteiligerweise müssen dabei Astlöcher durch Holzkitt oder mittels Patch ausgebessert werden.

In der EP 0038041 A2 sind dagegen Platten mit Holzelementen vorgesehen, die sich geneigt zur Plattenebene erstrecken. Nachteiligerweise weisen auch diese keine ausreichende Sperrung in Dickenrichtung (normal zur Plattenebene) auf, welche beispielsweise die Probleme bei Rahmenschalungen beheben würde.

Die DE 20 2011 108 054 U1 zeigt eine Holzmehrschichtplatte mit übereinanderliegenden, aus Leisten aufgebauten Schichten. Weiters beschrieben wird die Herstellung einer Platte, indem Trennschnitte parallel oder senkrecht zu den Leisten geführt werden. Die Platten werden zu Holzverbundplatten zusammengefügt. Nachteiligerweise ist die resultierende Holzverbundplatte in der Plattenebene nicht in beide Richtungen gesperrt.

Die DE 20 2013 103 959 U1 zeigt Sperrholz mit einer Anzahl an Furnierschichten, die aus Furnieren gebildet sind, die aufeinander gestapelt und aneinander befestigt sind. Die Furniere sind ins Sperrholz derart gelegt, dass die Faserrichtung in einigen Furnierschichten quer zur Faserrichtung der Furniere in einigen anderen Furnierschichten ist. Jedoch liegt die Faserrichtung in beiden Fällen in der Plattenebene; es sind nicht vertikal zur Plattenebene verlaufende Fasern vorgesehen. Somit ist das Sperrholz nachteiligerweise nicht in die Dickenrichtung gesperrt.

In der DE 10 2017 113 368 A1 sind einzelne Lagen der Mehrschichtplatte ausschließlich in Dickenrichtung gesperrt, und einzelne Lagen ausschließlich in einer Richtung in der Plattenebene gesperrt. In Summe ist die Mehrschichtplatte somit nicht ausreichend gesperrt.

Die Aufgabe der vorliegenden Erfindung liegt darin, zumindest einen der Nachteile des Stands der Technik zu lindern oder zu beseitigen. Insbesondere liegt die Aufgabe darin, einen zumindest teilweise aus Holz bestehenden Werkstoff bereitzustellen, der eine geringere Quellung senkrecht zur Plattenebene aufweist und in der Plattenebene gesperrt ist, und der vorteilhafterweise einfach herzustellen ist.

Dies wird gelöst durch einen Werkstoff wie eingangs angeführt, aufweisend eine erste Holzlage der zumindest einen Holzlage und eine zweite Holzlage der zumindest einen Holzlage, wobei die Streifenebene der zweiten Holzlage gegenüber der Streifenebene der ersten Holzlage um eine zur Plattenebene senkrechten Drehachse gedreht ist. Weiters wird dies gelöst durch ein Rahmenschalungselement aufweisend einen Rahmen und eine Schalungsplatte, wobei die Werkstoffplatte nach einer der in dieser Offenbarung beschriebenen Ausführungsformen als Schalungsplatte vorgesehen ist. Außerdem wird dies gelöst durch Verfahren zur Herstellung einer Werkstoffplatte wie eingangs angeführt, wobei das Abspalten zumindest einer Holzlage von dem Stapel das Abspalten einer ersten Holzlage der zumindest einen Holzlage und einer zweiten Holzlage der zumindest einen Holzlage umfasst,
wobei das Vorsehen der zumindest einen Holzlage (derart, dass die Lagenebene der zumindest einen Holzlage parallel zur Plattenebene der herzustellenden Werkstoffplatte ist) umfasst:
- Vorsehen der ersten Holzlage und der zweiten Holzlage derart, dass die jeweilige Lagenebene parallel zur Plattenebene der herzustellenden Werkstoffplatte ist und dass die Streifenebene der zweiten Holzlage gegenüber der Streifenebene der ersten Holzlage gedreht ist,
- Verkleben der ersten Holzlage und der zweiten Holzlage an ihrer jeweiligen sich parallel zur Lagenebene erstreckenden Oberfläche miteinander.

Die Werkstoffplatte weist somit Holzstreifen auf, deren Fasern in Richtung der zweiten Faserrichtung und damit senkrecht zur Plattenebene verlaufen. Somit ist die Werkstoffplatte in Dickenrichtung gesperrt und weist eine stark reduzierte Quellung in Dickenrichtung auf. Außerdem ist die Werkstoffplatte in zumindest eine weitere Richtung (die erste Faserrichtung) gesperrt. Zudem beinträchtigen Fehler in den Holzstreifen wie Astfehler die Struktur nur gering und können vernachlässigt werden, weshalb die Produktion einfacher und günstiger ist bzw. Holzstreifen geringerer Qualität und damit geringerer Kosten verarbeitet werden können.

Es ist vorgesehen, dass eine erste Holzlage der zumindest einen Holzlage und eine zweite Holzlage der zumindest einen Holzlage vorgesehen ist, wobei die Streifenebene der zweiten Holzlage gegenüber der Streifenebene der ersten Holzlage um eine zur Plattenebene senkrechten Drehachse gedreht ist. D.h. die zumindest eine Holzlage umfasst in diesem Fall zumindest zwei Holzlagen, nämlich die erste Holzlage und die zweite Holzlage. Da die Streifenebene der zweiten Holzlage gegenüber der Streifenebene der ersten Holzlage gedreht ist, ist auch (bezogen auf den Plattenwerkstoff) die erste Faserrichtung in der zweiten Holzlage gegenüber der ersten Faserrichtung in der ersten Holzlage gedreht. Somit ist, zusammen mit der zweiten Faserrichtung, die in der ersten Holzlage und in der zweiten Holzlage senkrecht zur Plattenebene ist, der Plattenwerkstoff in drei Richtungen gesperrt.

Die Faserrichtung bezeichnet die Hauptfaserrichtung des Faserverlauf im jeweiligen Holzstreifen. Die Hauptfaserrichtung ist in Hölzern senkrecht zur Radialrichtung und zur Tangentialrichtung und insbesondere parallel zur Stammachse. Insbesondere ist die Faserrichtung jene Richtung eines Ausgangsholzelements, in die das Ausgangsholzelement das geringste Quell- und Schwindmaß aufweist. Die Dickenrichtung ist die Richtung senkrecht zur Plattenebene. Die Werkstoffplatte weist eine geringere Erstreckung in Dickenrichtung als in die Richtungen in der Plattenebene auf. Insbesondere ist die Erstreckung der Werkstoffplatte in Dickenrichtung weniger als 30%, bevorzugt weniger als 20 %, der Erstreckung der Werkstoffplatte in jede der Richtungen in der Plattenebene. Die zumindest eine Holzlage weist eine geringere Erstreckung in Dickenrichtung als in die Richtungen in der Lagenebene auf. Vorzugsweise ist die Erstreckung der zumindest einen Holzlage in Dickenrichtung weniger als 30%, insbesondere weniger als 20 %, der Erstreckung der jeweiligen ersten Holzlage in jede der Richtungen in der Lagenebene.

Die ersten Holzstreifen und die zweiten Holzstreifen weisen Holzmaterial auf, vorzugsweise bestehen diese aus Holzmaterial. Die ersten Holzstreifen können unterschiedliche Holzarten aufweisen. Die zweiten Holzstreifen können unterschiedliche Holzarten aufweisen. Optional weisen alle ersten Holzstreifen die gleiche Holzart auf. Optional weisen alle zweiten Holzstreifen die gleiche Holzart auf. Beispielsweise können die ersten Holzstreifen und/oder die zweiten Holzstreifen Birke, Buche, Pappel, Paulownia, Fichte, Kiefer, Lärche und/oder Tanne aufweisen. Optional weisen die ersten und die zweiten Holzstreifen das gleiche Material auf. Die ersten Holzstreifen und die zweiten Holzstreifen der jeweiligen Holzlage sind insbesondere lamellenartig angeordnet und/oder sind insbesondere jeweils entlang ihrer zur Streifenebene parallelen Oberfläche miteinander verklebt, insbesondere verleimt, und/oder verpresst. D.h. vorzugsweise sind jeweils benachbarte Holzstreifen miteinander verbunden. Die Anzahl der ersten Holzstreifen in jeder Holzlage beträgt bevorzugt zumindest 2, besonders bevorzugt zumindest 5, noch mehr bevorzugt zumindest 20. Die Anzahl der zweiten Holzstreifen in jeder Holzlage beträgt bevorzugt zumindest 2, besonders bevorzugt zumindest 5, noch mehr bevorzugt zumindest 20. Zwischen den ersten und zweiten Holzstreifen können weitere Streifen vorgesehen sein. Vorzugsweise weist die zumindest eine Holzlage keinen weiteren Streifen außer den ersten Holzstreifen und den zweiten Holzstreifen auf. Vorzugsweise besteht die zumindest eine Holzlage aus den ersten Holzstreifen und den zweiten Holzstreifen und dem diese verbindenden Klebstoff. Vorzugsweise ist die Erstreckung der ersten und der zweiten Holzstreifen in Richtung normal zur Streifenebene geringer als deren Erstreckung parallel zur Streifenebene und parallel zur Lagenebene und beträgt vorzugsweise zwischen 0,1 mm und 40 mm, insbesondere von 0,5 mm bis 10 mm, bevorzugt von 0,9 mm bis 4 mm. Die ersten Holzstreifen und die zweiten Holzstreifen sind vorzugsweise gleich dick (quer zur Streifenebene).

Vorzugsweise sind zumindest 2 Holzlagen, besonders bevorzugt zumindest 3 Holzlagen, vorgesehen. Die Holzlagen sind vorzugsweise lamellenartig vorgesehen und jeweils benachbarte Holzlage sind an ihren angrenzenden zur Lagenebene parallelen Oberflächen miteinander verklebt. Vorzugsweise weist die Werkstoffplatte zumindest 2 Lagen, besonders bevorzugt zumindest 3 Lagen, auf, von denen zumindest eine die zumindest eine Holzlage ist. Die Lagen sind vorzugsweise lamellenartig vorgesehen und jeweils benachbarte Holzlagen sind an ihren angrenzenden zur Lagenebene parallelen Oberflächen miteinander verklebt. Die ersten und zweiten Holzstreifen unterschiedlicher Holzlagen können das gleiche Material oder unterschiedliche Materialien aufweisen.

Die Streifenebene kann für unterschiedliche Holzlagen unterschiedlich (nicht-parallel) sein. Somit kann auch die erste Faserrichtung der ersten Holzstreifen unterschiedlicher Holzlagen voneinander abweichen. Die erste Faserrichtung wird bezogen auf die jeweilige Holzlage definiert und ist insbesondere für alle Holzlagen bezogen auf die jeweilige gleich. Bei der Anordnung einer Holzlage gedreht um einen bestimmten Winkel (um eine Normale auf die Plattenebene) zu einer weiteren Holzlage sind somit im Bezugssystem der Platte auch die Streifenebenen der Holzlagen und die ersten Faserrichtungen der Holzlagen um denselben Winkel zueinander gedreht.

Es ist vorteilhaft, wenn die erste Faserrichtung parallel zur Lagenebene (der jeweiligen Holzlage) ist. Somit erfolgt eine Sperrung in diese Richtung und eine Quellung in zumindest eine Richtung in Plattenebene wird stark reduziert.

Es ist bevorzugt, wenn die erste Faserrichtung parallel zur Streifenebene der jeweiligen Holzlage ist. Somit ist die Werkstoffplatte zumindest auch in Richtung der Streifenebene der zumindest einen Holzlage gesperrt. Vorzugsweise ist die erste Faserrichtung parallel zur Lagenebene der jeweiligen Holzlage und parallel zur Streifenebene der jeweiligen Holzlage. D.h. die erste Faserrichtung ist senkrecht zur zweiten Faserrichtung und liegt in der Lagenebene (und damit in der Plattenebene). Somit erfolgt eine Sperrung zumindest auch in diese Richtung.

Es ist vorteilhaft, wenn jeweils einer der ersten Holzstreifen und einer der zweiten Holzstreifen in Richtung normal zur Streifenebene der jeweiligen Holzlage abwechselnd vorgesehen sind. Somit kann ein möglichst homogenes Verhalten erreicht und die Quellverhalten minimiert werden.

Es ist vorteilhaft, wenn die ersten Holzstreifen und die zweiten Holzstreifen Furnierstreifen sind. Somit erfolgt eine einfache Herstellung, insbesondere kann als Ausgangswerkstoff für die Holzlagen einfach Furniersperrholz bzw. ein Stapel von Furniersperrhölzern, die miteinander verklebt wurden, verwendet werden, indem diese senkrecht zur Plattenebene der Furniersperrhölzer zerteilt werden. Die Verklebung erfolgt beispielsweise mit Melamin, Phenolharz, Polyurethan (PU) und/oder Epoxi. Der Klebstoff kann beispielsweise durch sprühen, walzen, gießen und/oder filmbeschichten aufgetragen sein.

Es ist bevorzugt, wenn zumindest eine der zumindest einen Holzlage zumindest einen Nichtholzstreifen aufweist, der sich in der jeweiligen Holzlage parallel zur Streifenebene der jeweiligen Holzlage erstreckt und der kein Holzmaterial aufweist (oder der ein Nichtholzmaterial aufweist). Der Nichtholzstreifen weist beispielsweise Metall (z.B. eine Aluminiumfolie), Kunststoff (z.B. Polypropylen, insbesondere glasfaserverstärktes Polypropylen), Glasfasern und/oder Karbon auf oder besteht daraus. Damit können besonders tragfähige Lagen erzielt werden und mögliche negative Auswirkungen der Eigenschaften der Holzstreifen ausgeglichen werden. Beispielsweise kann abwechselnd eine bestimmte Anzahl an ersten und zweiten Holzstreifen und eine bestimmte Anzahl von Nichtholzstreifen vorgesehen sein. Beispielsweise kann jeder 10. Streifen ein Nichtholzstreifen sein und die übrigen Streifen erste und zweite Holzstreifen.

Es ist vorteilhaft, wenn aneinandergrenzende Streifen der ersten Holzstreifen, der zweiten Holzstreifen und vorzugsweise des zumindest einen Nichtholzstreifens jeweils an ihren sich parallel zur Streifenebene der jeweiligen Holzlage erstreckenden Oberflächen miteinander verklebt, insbesondere verleimt, und/oder verpresst sind. Die Verklebung erfolgt beispielsweise mit Melamin, Phenolharz, PU und/oder Epoxi. Der Klebstoff kann beispielsweise durch sprühen, walzen, gießen und/oder filmbeschichten aufgetragen sein.

Es ist bevorzugt, wenn die Streifenebene der zweiten Holzlage senkrecht zu der Streifenebene der ersten Holzlage steht, d.h. um 90° in der Plattenebene gedreht ist. Somit ist das Quell- und Schwindverhalten des Plattenwerkstoffs homogenisiert und in alle Richtungen stark reduziert.

Es ist bevorzugt, wenn zumindest eine dritte Holzlage der zumindest einen Holzlage vorgesehen ist, wobei die zweite Holzlage zwischen der ersten Holzlage und der dritten Holzlage vorgesehen ist und die Streifenebene der dritten Holzlage parallel zur Streifenebene der ersten Holzlage ist. D.h. die zumindest eine Holzlage umfasst in diesem Fall zumindest drei Holzlagen, nämlich die erste Holzlage, die zweite Holzlage und die dritte Holzlage. Da die Streifenebene der dritten Holzlage parallel zur Streifenebene der ersten Holzlage ist, sind auch die ersten Faserrichtungen der ersten und dritten Holzlage (in Bezug auf die Werkstoffplatte) parallel.

Vorzugsweise ist eine Anzahl von Holzlagen vorgesehen, von denen Holzlagen einer ersten Art zueinander parallele Streifenebenen aufweisen und Holzlagen einer zweiten Art zueinander parallele Streifenebenen aufweisen. Bevorzugt ist abwechselnd eine Holzlage erster Art und eine Holzlage zweiter Art vorgesehen. Bevorzugt sind zumindest zwei Holzlagen erster Art und eine Holzlage zweiter Art, besonders bevorzugt zumindest drei Holzlagen erster Art und zwei Holzlagen zweiter Art, vorgesehen. Vorzugsweise weist die Holzlage erster Art die im Zusammenhang mit der ersten Holzlage beschriebenen Eigenschaften und die Holzlage zweiter Art die im Zusammenhang mit der zweiten Holzlage beschriebenen Eigenschaften auf.

Es ist bevorzugt, wenn benachbarte Holzlagen der zumindest einen Holzlage jeweils an ihren sich parallel zur Lagenebene erstreckenden Oberflächen miteinander verklebt, insbesondere verleimt, und/oder verpresst sind. Die Verklebung erfolgt beispielsweise mit Melamin, Phenolharz, PU und/oder Epoxi. Der Klebstoff kann beispielsweise durch sprühen, walzen, gießen und/oder filmbeschichten aufgetragen sein. Beispielsweise können die erste Holzlage und die zweite Holzlage an ihren angrenzenden Oberflächen miteinander verbunden und die zweite Holzlage und die dritte Holzlage an ihren angrenzenden Oberflächen miteinander verbunden sein.

Es ist bevorzugt, wenn eine äußere sich parallel zur Lagenebene erstreckende Oberfläche einer äußersten Holzlage der zumindest einen Holzlage imprägniert ist. Insbesondere weist die Werkstoffplatte zwei äußere Holzlagen auf und deren abgewandten sich parallel zur Lagenebene erstreckenden Oberflächen sind imprägniert. Durch die Imprägnierung wird die Haltbarkeit der Werkstoffplatte deutlich erhöht. Die Werkstoffplatte ist aufgrund des hohen Hirnholzanteils an der Oberfläche (der sich aus der zweiten Faserrichtung senkrecht zur Plattenebene ergibt) deutlich erhöht, beispielsweise gegenüber herkömmlichem Sperrholz oder herkömmlichen Holzwerkstoffplatten.

Es ist vorteilhaft, wenn die Werkstoffplatte zwei Decklagen aufweist, die vorzugsweise kein Holzmaterial aufweisen und zwischen denen die zumindest eine Holzlage vorgesehen ist. Die Decklagen können insbesondere absperrend wirken. Alternativ kann auch nur eine Decklage vorgesehen sein, die an eine äußerste der Holzlagen angrenzend angeordnet ist. Durch die Dimensionsstabilität insbesondere in allen Raumrichtungen können Kunststoff- oder andere Beschichtungen aufgebracht werden, die bei üblichen Holzwerkstoffen durch feuchteinduzierte Dimensionsänderungen reißen würden. Dadurch kann dauerhafter Feuchteschutz durch einfache Beschichtungen im Außenbereich (z.B. bei Fassadenplatten) erzielt werden. Die Decklagen weisen jeweils vorzugsweise Kunststoff, insbesondere mit Glasfaser verstärktes Polypropylen, auf.

Die Decklagen können auch jeweils ein Phenolharzfilm oder ein imprägniertes Papier sein, wodurch insbesondere eine wasserabweisende Wirkung erzielt werden kann. Alternativ können die Decklagen auch ein Holzmaterial aufweisen. Die Decklagen erstrecken sich jeweils insbesondere in einer zur Plattenebene parallelen Lagenebene. Vorzugsweise decken die Decklagen die Holzlagen in Richtung normal zur Plattenebene im Wesentlichen vollständig ab.

Es ist bevorzugt, wenn die Werkstoffplatte zumindest eine Nichtholzlage aufweist, wobei jede der zumindest einen Nichtholzlage sich in einer zur Plattenebene parallelen Lagenebene erstreckt. Die Nichtholzlage kann als Funktionslage dienen. Vorzugsweise ist die Nichtholzlage (bzw. jede der zumindest einen Nichtholzlage) zwischen zwei Holzlagen oder zwischen einer Holzlage (d.h. einer der beiden äußeren Holzlagen) und einer Decklage vorgesehen. Die Nichtholzlage weist vorzugsweise Glasfaser, Aluminium und/oder Polyurethan auf.

Bezugnehmend auf das Rahmenschalungselement ist es bevorzugt, wenn dieses mit dem Rahmen verbundene Querstreben aufweist.

Bezugnehmend auf das Verfahren zur Herstellung der Werkstoffplatte ist es vorgesehen, dass das Abspalten zumindest einer Holzlage von dem Stapel das Abspalten einer ersten Holzlage der zumindest einen Holzlage und einer zweiten Holzlage der zumindest einen Holzlage umfasst,
wobei das Vorsehen der zumindest einen Holzlage (derart, dass die Lagenebene der zumindest einen Holzlage parallel zur Plattenebene der herzustellenden Werkstoffplatte ist) umfasst:
- Vorsehen der ersten Holzlage und der zweiten Holzlage derart, dass die jeweilige Lagenebene parallel zur Plattenebene der herzustellenden Werkstoffplatte ist und dass die Streifenebene der zweiten Holzlage gegenüber der Streifenebene der ersten Holzlage gedreht ist,
- Verkleben der ersten Holzlage und der zweiten Holzlage an ihrer jeweiligen sich parallel zur Lagenebene erstreckenden Oberfläche miteinander.

Es ist vorteilhaft, wenn die Streifenebene der zweiten Holzlage senkrecht zu der Streifenebene der ersten Holzlage ist, d.h. einen Winkel von 90° mit dieser einschließt.

Im Allgemeinen ist es bevorzugt, wenn das Verfahren das Abspalten mehr als einer Holzlage von dem Stapel umfasst, die jeweils an ihren zur Lagenebene (d.h. zur ursprünglichen Abtrennungsebene) parallelen Oberflächen miteinander verklebt und/oder verpresst werden. Vorzugsweise ist dabei jede zweite Holzlage gedreht. Vorzugsweise werden die Holzlagen entsprechend der oben beschriebenen Holzlagen erster Art und zweiter Art angeordnet und miteinander verklebt und/oder verpresst.

Um eine größere Erstreckung der Holzlagen und damit der Werkstoffplatte erzielen zu können, ist es vorteilhaft, wenn zumindest zwei Holzlagen nach ihrer Abtrennung vom Stapel an ihren zur Streifenebene parallelen Oberflächen miteinander verbunden werden, um eine Holzlage zu erzielen, die eine größere Erstreckung normal zur Streifenebene aufweist.

Die Erfindung betrifft weiters ein Verfahren zur Herstellung eines Rahmenschalungselements, wobei die erfindungsgemäße Werkstoffplatte an einem Rahmen befestigt wird.

Es ist bevorzugt, wenn das Vorsehen des Stapels von ersten und zweiten Holzstreifen umfasst: Stapeln von Furniersperrhölzern senkrecht zu ihren Plattenoberflächen und Verkleben und/oder Verpressen der Furniersperrhölzer jeweils an ihren Plattenoberflächen (sodass dies den Stapel bildet).

Die Werkstoffplatte kann beispielsweise auch block- oder quaderförmig sein. Somit können aus der Werkstoffplatte z.B. 3D-Modelle für Automodelle oder formstabile, leichte Formen für bspw. Boots- und Schiffsrümpfe oder auch stabile großvolumige Formen für 3D-Beton. Vorteilhaft ist dabei insbesondere eine Dimensionsstabilität bei Feuchte und Temperatureinwirkung insbesondere in alle drei Raumrichtungen, Stabilität/Druckfestigkeit, leicht Bearbeitbarkeit durch Sägen, Fräsen und Schleifen und geringe Kosten gegenüber Alternativmaterialien aus Kunststoff oder Metall.

Die erfindungsgemäße Werkstoffplatte kann beispielsweise im Möbelbau, bei Bauprodukten, bei nachhaltigen Produkten bei schwankender Luftfeuchtigkeit, im Modellbau (Autobau), für diverse Platten oder im Holzriegelbau (z.B. um typische Risse zwischen Wand und Decke zu vermeiden) verwendet werden.

Die Erfindung betrifft außerdem ein Werkstoffplatte, die sich entlang einer Plattenebene erstreckt, aufweisend zumindest eine Holzlage, wobei jede der zumindest einen Holzlage sich in einer zur Plattenebene parallelen Lagenebene erstreckt und erste Holzstreifen mit einer ersten Faserrichtung und zweite Holzstreifen mit einer zweiten Faserrichtung aufweist, wobei sich die ersten Holzstreifen und die zweiten Holzstreifen in der jeweiligen Holzlage parallel zu einer zur Lagenebene senkrechten Streifenebene der jeweiligen Holzlage erstrecken, wobei die erste Faserrichtung winkelig zu einer Normalen auf die Lagenebene angeordnet ist, wobei die zweite Faserrichtung normal zur Lagenebene ist, und die vorzugsweise gemäß einer der hierin beschriebenen bevorzugten Ausführungsformen ausgestaltet ist,
optional aufweisend eine erste Holzlage der zumindest einen Holzlage und eine zweite Holzlage der zumindest einen Holzlage, wobei die Streifenebene der zweiten Holzlage gegenüber der Streifenebene der ersten Holzlage um eine zur Plattenebene senkrechten Drehachse gedreht ist.

Außerdem betrifft die Erfindung ein Verfahren zur Herstellung einer Werkstoffplatte, die sich entlang einer Plattenebene erstreckt, aufweisend zumindest die Schritte:
- Vorsehen eines Stapels von sich jeweils parallel zu einer Streifenebene des Stapels erstreckenden ersten Holzstreifen mit einer ersten Faserrichtung und zweiten Holzstreifen mit einer zweiten Faserrichtung, wobei die zweite Faserrichtung parallel zur Streifenebene des Stapels ist und die erste Faserrichtung winkelig zur zweiten Faserrichtung angeordnet ist;
- Abspalten zumindest einer Holzlage von dem Stapel, wobei eine Abtrennung vom Stapel entlang einer Abtrennungsebene erfolgt, die senkrecht zur Streifenebene des Stapels und senkrecht zur zweiten Faserrichtung ist, sodass eine Streifenebene der jeweiligen Holzlage normal zu einer Lagenebene, in der sich die jeweilige Holzlage erstreckt, ist, wobei sich die ersten Holzstreifen und die zweiten Holzstreifen parallel zu der Streifenebene der jeweiligen Holzlage erstrecken;
- Vorsehen der zumindest einen Holzlage derart, dass die Lagenebene der zumindest einen Holzlage parallel zur Plattenebene der herzustellenden Werkstoffplatte ist;

wobei das Verfahren vorzugsweise gemäß eine der weiteren hierin beschriebenen vorzugsweisen Varianten ausgeführt ist, und
optional:
   das Abspalten zumindest einer Holzlage von dem Stapel das Abspalten einer ersten Holzlage der zumindest einen Holzlage und einer zweiten Holzlage der zumindest einen Holzlage umfasst,
   wobei das Vorsehen der zumindest einen Holzlage (derart, dass die Lagenebene der zumindest einen Holzlage parallel zur Plattenebene der herzustellenden Werkstoffplatte ist) umfasst:
      - Vorsehen der ersten Holzlage und der zweiten Holzlage derart, dass die jeweilige Lagenebene parallel zur Plattenebene der herzustellenden Werkstoffplatte ist und dass die Streifenebene der zweiten Holzlage gegenüber der Streifenebene der ersten Holzlage gedreht ist,
      - Verkleben der ersten Holzlage und der zweiten Holzlage an ihrer jeweiligen sich parallel zur Lagenebene erstreckenden Oberfläche miteinander.

Nachstehend wird die Erfindung anhand von in den Figuren gezeigten bevorzugten Ausführungsbeispielen erläutert.
Fig. 1A bis Fig. 1F zeigen schematisch ein bevorzugtes Herstellungsverfahren einer erfindungsgemäßen Werkstoffplatte.
Fig. 2A zeigt schematisch eine bevorzugte Ausführungsform der erfindungsgemäßen Werkstoffplatte.
Fig. 2B zeigt schematisch die gleiche Ausführungsform wie Fig. 2A in einer teilweise abgedeckten Ansicht.
Fig. 3A zeigt schematisch eine weitere bevorzugte Ausführungsform der erfindungsgemäßen Werkstoffplatte.
Fig. 3B zeigt schematisch die gleiche Ausführungsform wie Fig. 3A aus der anderen Richtung sowie ein Detail der Werkstoffplatte.
Fig. 3C zeigt schematisch eine Explosionsdarstellung einer bevorzugten Ausführungsform eines Rahmenschalungselements mit der Werkstoffplatte der Fig. 3A.
Fig. 3D zeigt schematisch eine Explosionsdarstellung der gleichen Ausführungsform des Rahmenschalungselements wie Fig. 3C.

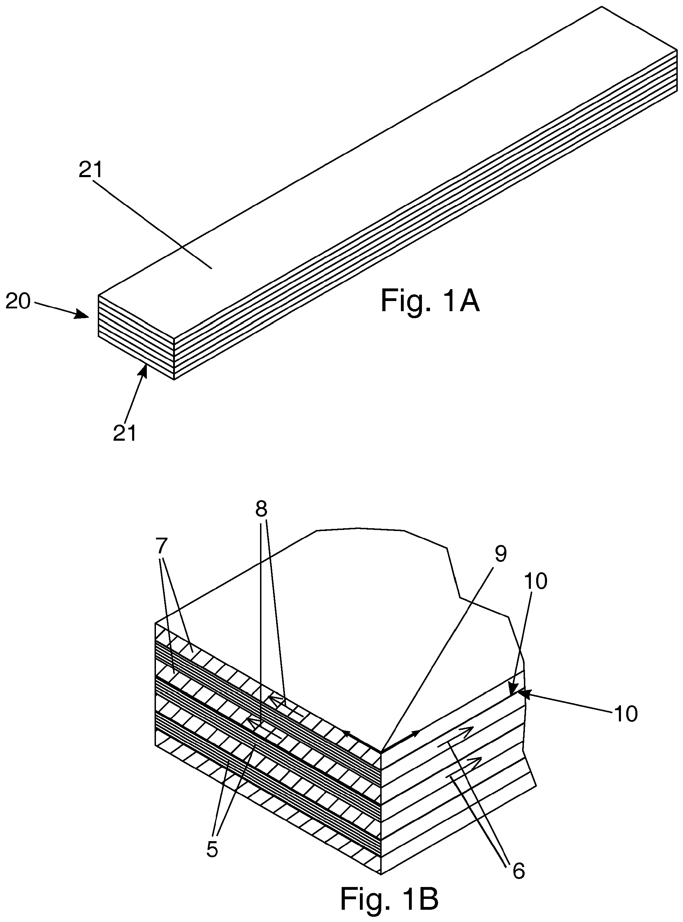

Fig. 1A bis Fig. 1F zeigen schematisch die Herstellung einer erfindungsgemäßen Werkstoffplatte **1.**

In dieser Ausführungsform werden Furniersperrhölzer 20 als Ausgangsmaterial verwendet (siehe Fig. 1A). Diese sind in Fig. 1B in größerem Detail dargestellt. Die Furniersperrhölzer 20 weisen sich parallel zu einer Streifenebene 9 erstreckende erste Holzstreifen 5 mit einer ersten Faserrichtung 6 und zweite Holzstreifen 7 mit einer zweiten Faserrichtung 8 auf. Ebenen sind in den Figuren jeweils durch zwei die jeweilige Ebene aufspannende Pfeile dargestellt. Dabei ist die zweite Faserrichtung 8 parallel zur Streifenebene 9 und die erste Faserrichtung 6 gegenüber der zweiten Faserrichtung 8 geneigt. In dieser Ausführung ist die erste Faserrichtung 6 parallel zur Streifenebene 9 und senkrecht zur zweiten Faserrichtung **8.** Die ersten Holzstreifen 5 und die zweiten Holzstreifen 7 sind jeweils abwechselnd vorgesehen und sind jeweils an ihren sich parallel zur Streifenebene 9 erstreckenden Oberfläche 10 miteinander verklebt und verpresst.

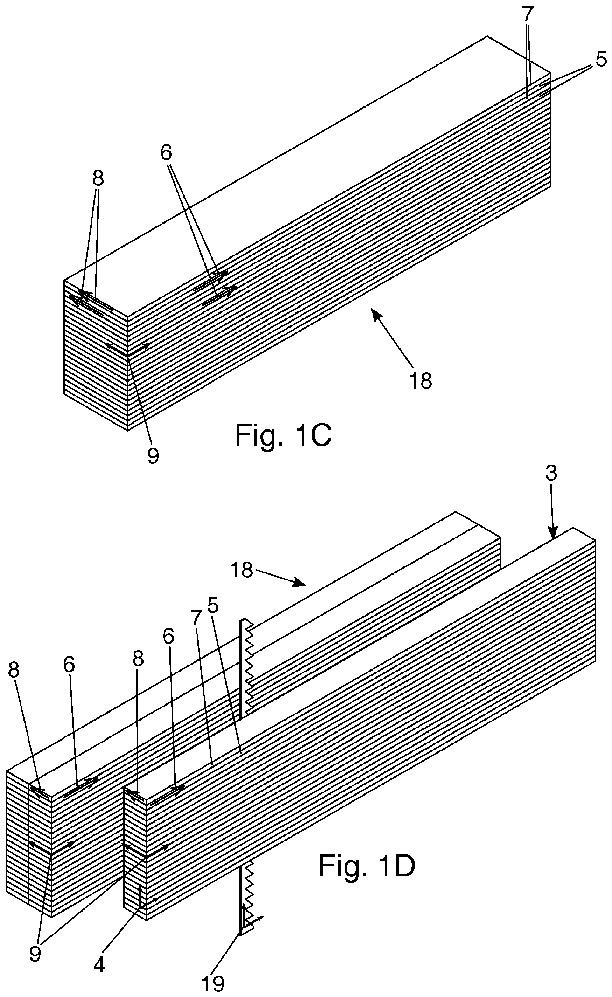

Die Furniersperrhölzer 20 werden senkrecht zu ihren Plattenoberflächen 21 gestapelt und jeweils an ihren angrenzenden Plattenoberflächen 21 verklebt. Somit ergibt sich ein Stapel 18 (siehe Fig. 1C), von den sich jeweils parallel zu der Streifenebene 9 erstreckenden ersten Holzstreifen 5 mit der ersten Faserrichtung 6 und den sich ebenfalls jeweils parallel zu der Streifenebene 9 erstreckenden zweiten Holzstreifen 7 mit der zweiten Faserrichtung **8.** Dabei stehen in dieser Ausführungsform die erste Faserrichtung 6 und die zweite Faserrichtung 8 senkrecht aufeinander und sind parallel zur Streifenebene 9.

Im nächsten Schritt (vgl. Fig. 1D) erfolgt ein Abspalten zumindest einer Holzlage 3 von dem Stapel 18. Dafür erfolgt eine Abtrennung vom Stapel 18 entlang einer Abtrennungsebene 19, die senkrecht zur Streifenebene 9 und senkrecht zur zweiten Faserrichtung 8 ist. Somit erstrecken sich die ersten Holzstreifen 5 und die zweiten Holzstreifen 7 parallel zu einer Streifenebene 9 der jeweiligen Holzlage 3, die normal zu einer zur Abtrennungsebene 19 parallelen Lagenebene 4 ist, in der sich die jeweilige Holzlage 3 erstreckt.

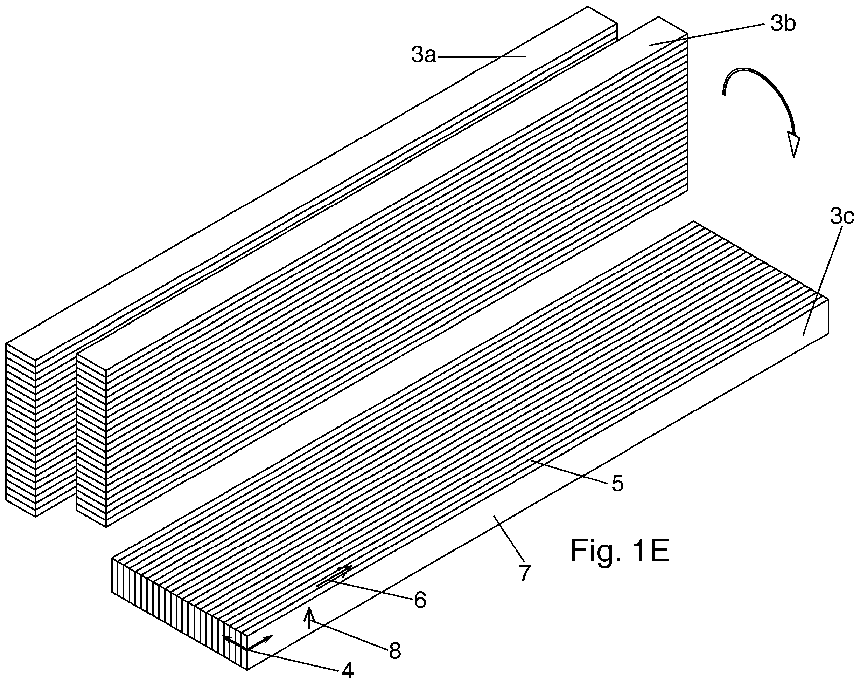

Im vorliegenden Fall umfasst das Abspalten zumindest einer Holzlage von dem Stapel 18 insbesondere das Abspalten einer ersten Holzlage 3a, einer zweiten Holzlage 3b und einer dritten Holzlage 3c (vgl. Fig. 1E).

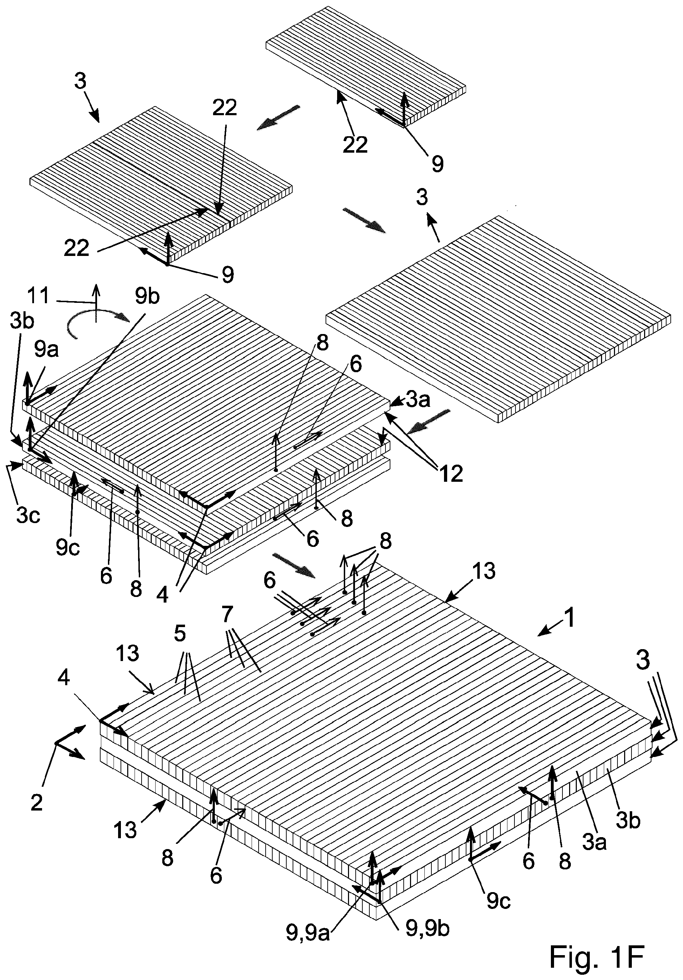

Wie in den obersten drei Schritten der Fig. 1F schematisch dargestellt, können, um eine größere Erstreckung der Holzlagen 3 und damit der Werkstoffplatte 1 zu erzielen, zumindest zwei Holzlagen 3 nach ihrer Abtrennung vom Stapel 18 an ihren zur Streifenebene 9 parallelen Oberflächen 22 miteinander verbunden werden, um eine Holzlage 3 zu erzielen, die eine größere Erstreckung senkrecht zur Streifenebene 9 aufweist.

Nach der Abspaltung vom Stapel 18 werden die Holzlagen 3 umgelegt (vgl. Fig. 1E).

In dieser Ausführungsform soll die Werkstoffplatte 1 drei Holzlagen 3a, 3b, 3c aufweisen. Wie im vierten Schritt von oben in Fig. 1F dargestellt, sind die erste Holzlage 3a, die zweite Holzlage 3b und die dritte Holzlage 3c übereinander angeordnet, sodass ihre jeweilige Lagenebene 4 parallel zur Plattenebene 2 der herzustellenden Werkstoffplatte 1 ist. Außerdem wird die zweite Holzlage 3b (oder jede zweite Holzlage, im Falle einer größeren Anzahl an Holzlagen 3) gegenüber der ersten Holzlage 3a und der zweiten Holzlage 3c um eine zur Plattenebene 2 bzw. Lagenebene 4 senkrechte Drehachse 11 gedreht, in dieser Ausführungsform um 90°. Somit ist die Streifenebene 9b der zweiten Holzlage 3b senkrecht zur Streifenebene 9a der ersten Holzlage 3a und zur Streifenebene 9c der dritten Holzlage 3c. Damit wird erzielt, dass einerseits in jeder der Holzlagen 3a, 3b, 3c die zweite Faserrichtungen 8 senkrecht zur Plattenebene 2 vorliegen und somit der resultierende Plattenwerkstoff 1 in Dickenrichtung gesperrt ist. Andererseits liegen die ersten Faserrichtungen 6 in der Plattenebene und sind für die erste Holzlage 3a und die dritte Holzlage 3c senkrecht zur zweiten Holzlage 3b. Somit ist die resultierende Werkstoffplatte 1 auch in der Plattenebene 2 gesperrt. In dieser Ausführungsform ist der resultierende Plattenwerkstoff 1 also in drei Raumrichtungen gesperrt.

Die erste Holzlage 3a und die zweite Holzlage 3b sowie die zweite Holzlage 3b und die dritte Holzlage 3c werden noch an ihren jeweiligen sich parallel zur Lagenebene 4 erstreckenden Oberflächen 12 miteinander verklebt, um den Plattenwerkstoff 1 zu erhalten (vgl. unterster Schritt in Fig. 1F). Die Werkstoffplatte erstreckt sich somit parallel zur Plattenebene 2. Bevorzugt sind die zwei äußeren sich parallel zur Plattenebene 2 erstreckenden Oberflächen 13 der äußersten Holzlagen, d.h. in dieser Ausführungsform der ersten Holzlage 3a und der dritten Holzlage 3c imprägniert.

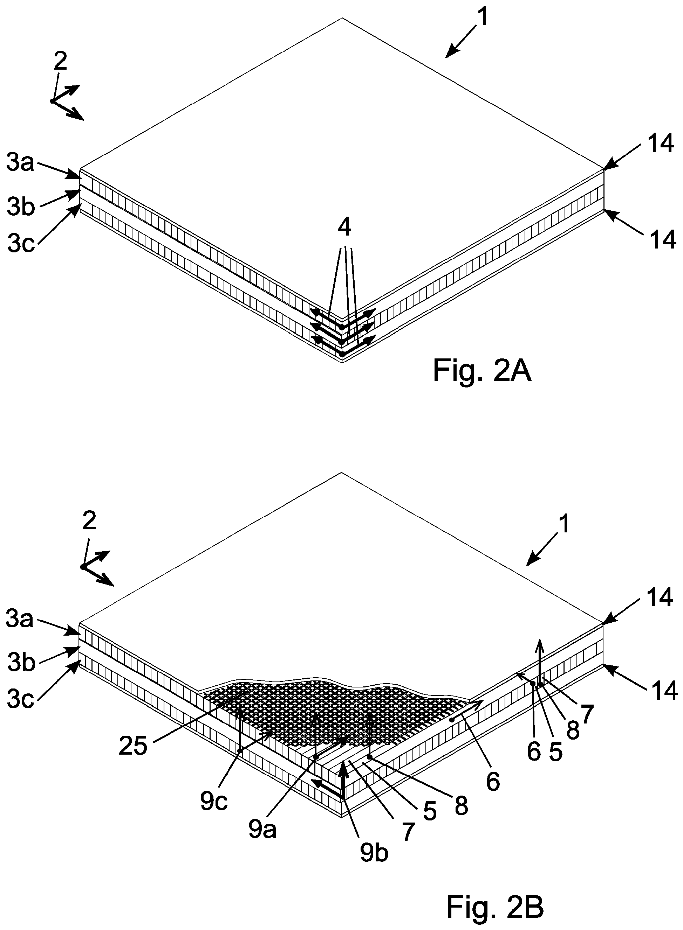

Fig. 2A zeigt schematisch eine bevorzugte Ausführungsvariante der erfindungsgemäßen Werkstoffplatte 1. Fig. 2B zeigt schematisch die gleiche Ausführungsvariante wie Fig. 2A in einer teilweise abgedeckten Ansicht. Wie das im letzten Schritt der Fig. 1E dargestellte Ausführungsbeispiel weist die Werkstoffplatte 1 in dieser Ausführungsform eine erste Holzlage 3a, eine zweite Holzlage 3b und eine dritte Holzlage 3c auf. Die Streifenebenen 9a, 9b, 9c und damit die ersten und zweiten Holzstreifen 5, 7 sind gleich angeordnet wie bei der im letzten Schritt der Fig. 1E dargestellten Ausführungsform. Somit sind in der jeweiligen Holzlage 9a, 9b, 9c erste Holzstreifen 5 und zweite Holzstreifen 7 abwechselnd vorgesehen. Es erstreckt sich jede der Holzlagen 3a, 3b, 3c in der jeweiligen zur Plattenebene 2 parallelen Lagenebene 4. Jeder der Holzlagen 3a, 3b, 3c weist die ersten Holzstreifen 5 mit der ersten Faserrichtung 6 und die zweiten Holzstreifen 7 mit der zweiten Faserrichtung 8 auf. Die Streifenebene 9b der zweiten Holzlage 3b steht senkrecht zu den Streifenebenen 9a, 9c der ersten und dritten Holzlage 3a, 3c.

Die ersten Faserrichtungen 6 sind jeweils parallel zur Lagenebene 4 und parallel zur Streifenebene 9 der jeweiligen Holzlage 3a, 3b, 3c, sodass die erste Faserrichtung 6 der zweiten Holzlage 3b senkrecht zur ersten Faserrichtung 6 der ersten Holzlage 3a und der dritten Holzlage 3c steht. Die zweiten Faserrichtungen 8 sind jeweils senkrecht zur Lageebene 4 und damit zur Plattenebene 1. Es ist jeweils einer der ersten Holzstreifen 5 und einer der zweiten Holzstreifen 7 in Richtung senkrecht zur Streifenebene 9 der jeweiligen Holzlage 3a, 3b, 3c abwechselnd vorgesehen. Bevorzugt sind auch in dieser Ausführungsform die ersten Holzstreifen 5 und die zweiten Holzstreifen 7 Furnierstreifen.

Im Unterschied zur Ausführungsform des letzten Schritts der Fig. 1E sind in dieser Form zusätzlich zwei Decklagen 14 vorgesehen, die kein Holzmaterial aufweisen und zwischen denen die Holzlagen 3a, 3b, 3c vorgesehen sind. Die Decklagen 14 erstrecken ist ebenfalls parallel zur Plattenebene 2. Die obere Decklage 14 ist mit der (obersten) ersten Holzlage 3a und die untere Decklage 14 ist mit der (untersten) dritten Holzlage 3c verklebt. In Fig. 2B ist außerdem eine Nichtholzlage 25 als Verstärkungslage vorgesehen, die beispielsweise Glasfaser, Carbon, Vliese (für eine weichere Oberfläche) und/oder Alufolie als Dampfbremse aufweisen kann. Es ist jeweils eine erste Nichtholzlage 25 zwischen der oberen Decklage 14 und der (obersten) ersten Holzlage 3a und eine (in Fig. 2B nicht sichtbare) zweite Nichtholzlage 25 zwischen der unteren Decklage 14 und der (untersten) dritten Holzlage 3c vorgesehen.

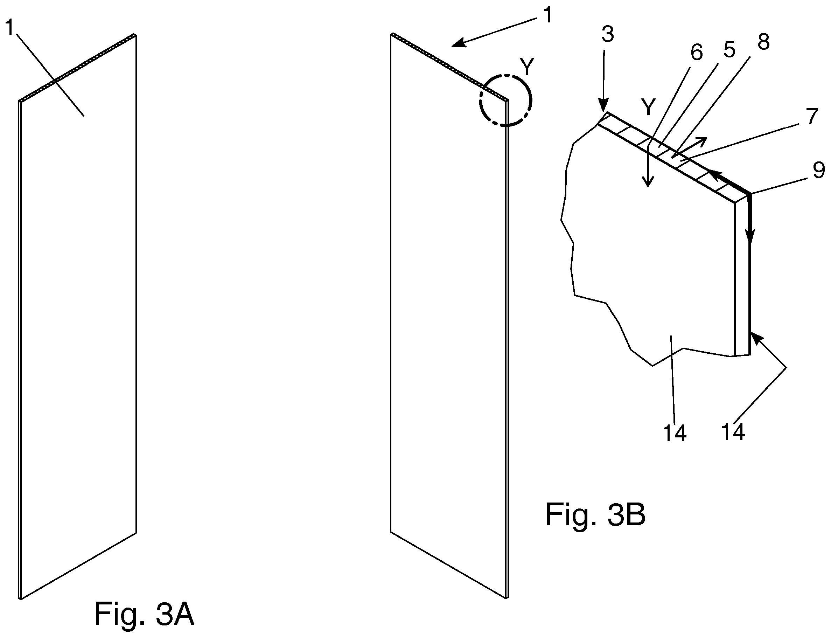

Fig. 3A zeigt schematisch eine weitere bevorzugte Ausführungsform der erfindungsgemäßen Werkstoffplatte 1. Fig. 3B zeigt schematisch die gleiche Ausführungsform wie Fig. 3A aus der anderen Richtung sowie ein Detail Y der Werkstoffplatte **1.** In dieser Ausführungsform weist die Werkstoffplatte nur eine Holzlage 3 mit ersten Holzstreifen 5 und zweiten Holzstreifen 7 auf. Die Holzlage 3 ist gleich ausgestaltet wie beispielsweise die erste Holzlage 3a der Ausführungsform der Fig. 2A. Es sind zwei Decklagen 14 vorgesehen, die kein Holzmaterial aufweisen und zwischen denen die zumindest eine Holzlage 3 vorgesehen ist.

Die Holzlage 3 verhindert dabei als Kern eine Dickenquellung. Eine Quellung in Plattenebene 3 kann insbesondere auch durch die Decklagen (bspw. glasfaserverstärktes PP) vermindert werden.

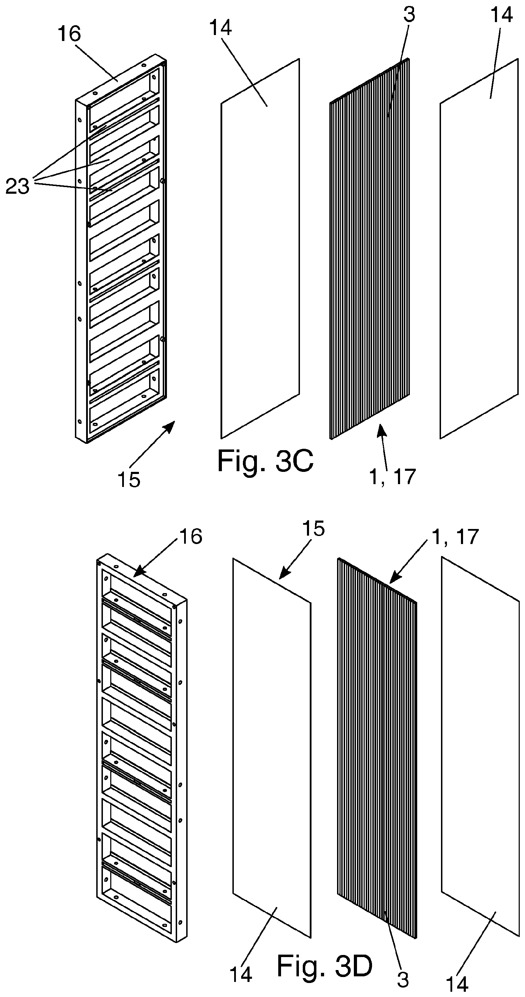

Fig. 3C zeigt schematisch eine Explosionsdarstellung einer bevorzugten Ausführungsform eines Rahmenschalungselements 15 mit der Werkstoffplatte 1 der Fig. 3A. Fig. 3D zeigt schematisch eine Explosionsdarstellung der gleichen Ausführungsform des Rahmenschalungselements 15 wie Fig. 3C. Auch die Werkstoffplatte 1 selbst ist als Explosionsdarstellung abgebildet, sodass die zwei Decklagen 14 und die Holzlage 3 einzeln sichtbar sind. Das Rahmenschalungselement 15 weist die Werkstoffplatte 1 als Schalungsplatte 17 und einen Rahmen 16 mit mit dem Rahmen 16 verbundene Querstreben 23 auf. Im Betriebszustand, d.h. bei der Schalung, wird die Schalungsplatte 17 vom Rahmen 16 getragen.

## Patentansprüche

1. Werkstoffplatte (1), die sich entlang einer Plattenebene (2) erstreckt, aufweisend zumindest eine Holzlage (3), wobei jede der zumindest einen Holzlage (3) sich in einer zur Plattenebene (2) parallelen Lagenebene (4) erstreckt und erste Holzstreifen (5) mit einer ersten Faserrichtung (6) und zweite Holzstreifen (7) mit einer zweiten Faserrichtung (8) aufweist, wobei sich die ersten Holzstreifen (5) und die zweiten Holzstreifen (7) in der jeweiligen Holzlage (3) parallel zu einer zur Lagenebene (4) senkrechten Streifenebene (9) der jeweiligen Holzlage (3) erstrecken, wobei die erste Faserrichtung (6) gegenüber einer Normalen auf die Lagenebene (4) geneigt ist und die zweite Faserrichtung (7) normal zur Lagenebene (4) ist
**gekennzeichnet durch**
eine erste Holzlage (3a) der zumindest einen Holzlage (3) und eine zweite Holzlage (3b) der zumindest einen Holzlage (3), wobei die Streifenebene (9b) der zweiten Holzlage (3b) gegenüber der Streifenebene (9a) der ersten Holzlage (3a) um eine zur Plattenebene (2) senkrechten Drehachse (11) gedreht ist.

2. Werkstoffplatte (1) nach Anspruch 1, wobei die erste Faserrichtung (6) parallel zur Lagenebene (4) ist und/oder wobei die erste Faserrichtung (6) parallel zur Streifenebene (9) der jeweiligen Holzlage (3) ist.

3. Werkstoffplatte (1) nach einem der Ansprüche 1 oder 2, wobei jeweils einer der ersten Holzstreifen (5) und einer der zweiten Holzstreifen (7) in Richtung senkrecht zur Streifenebene (9) der jeweiligen Holzlage (3) abwechselnd vorgesehen sind.

4. Werkstoffplatte (1) nach einem der Ansprüche 1 bis 3, wobei die ersten Holzstreifen (5) und die zweiten Holzstreifen (7) Furnierstreifen sind.

5. Werkstoffplatte (1) nach einem der Ansprüche 1 bis 4, wobei zumindest eine der zumindest einen Holzlage (3) zumindest einen Nichtholzstreifen aufweist, der sich in der jeweiligen Holzlage (3) parallel zur Streifenebene (9) der jeweiligen Holzlage (3) erstreckt und der kein Holzmaterial aufweist.

6. Werkstoffplatte (1) nach einem der Ansprüche 1 bis 5, wobei aneinandergrenzende Streifen der ersten Holzstreifen (5), der zweiten Holzstreifen (7) und vorzugsweise des zumindest einen Nichtholzstreifens jeweils an ihren sich parallel zur Streifenebene (9) der jeweiligen Holzlage (3) erstreckenden Oberflächen (10) miteinander verklebt, insbesondere verleimt, und/oder verpresst sind.

7. Werkstoffplatte (1) nach einem der vorhergehenden Ansprüche, wobei die Streifenebene (9b) der zweiten Holzlage (3b) senkrecht zu der Streifenebene (9a) der ersten Holzlage (3a) steht.

8. Werkstoffplatte (1) nach einem der vorhergehenden Ansprüche, wobei zumindest eine dritte Holzlage (3c) der zumindest einen Holzlage (3) vorgesehen ist, wobei die zweite Holzlage (3b) zwischen der ersten Holzlage (3a) und der dritten Holzlage (3c) vorgesehen ist und die Streifenebene (9c) der dritten Holzlage (3c) parallel zur Streifenebene (9a) der ersten Holzlage (3a) ist.

9. Werkstoffplatte (1) nach einem der vorhergehenden Ansprüche, wobei benachbarte Holzlagen (3) der zumindest einen Holzlage (3) jeweils an ihren sich parallel zur Lagenebene erstreckenden Oberflächen (12) miteinander verklebt, insbesondere verleimt, und/oder verpresst sind.

10. Werkstoffplatte (1) nach einem der vorhergehenden Ansprüche, wobei eine äußere sich parallel zur Lagenebene (4) erstreckende Oberfläche (13) einer äußersten Holzlage der zumindest einen Holzlage (3) imprägniert ist.

11. Werkstoffplatte (1) nach einem der vorhergehenden Ansprüche,
aufweisend zwei Decklagen (14), die vorzugsweise kein Holzmaterial aufweisen und zwischen denen die zumindest eine Holzlage (3) vorgesehen ist, und/oder
aufweisend zumindest eine Nichtholzlage (25), wobei jede der zumindest einen Nichtholzlage (25) sich in einer zur Plattenebene parallelen Lagenebene erstreckt.

12. Rahmenschalungselement (15) aufweisend einen Rahmen (16) und eine Schalungsplatte (17), wobei die Werkstoffplatte (1) nach einem der vorhergehenden Ansprüche als Schalungsplatte (17) vorgesehen ist.

13. Verfahren zur Herstellung einer Werkstoffplatte (1), die sich entlang einer Plattenebene (2) erstreckt, aufweisend zumindest die Schritte:
- Vorsehen eines Stapels (18) von sich jeweils parallel zu einer Streifenebene (9) des Stapels erstreckenden ersten Holzstreifen (5) mit einer ersten Faserrichtung (6) und zweiten Holzstreifen (7) mit einer zweiten Faserrichtung (8), wobei die zweite Faserrichtung (8) parallel zur Streifenebene (9) des Stapels ist und die erste Faserrichtung (6) winkelig zur zweiten Faserrichtung (8) angeordnet ist;
- Abspalten zumindest einer Holzlage (3) von dem Stapel (18), wobei eine Abtrennung vom Stapel (18) entlang einer Abtrennungsebene (19) erfolgt, die senkrecht zur Streifenebene (9) des Stapels und senkrecht zur zweiten Faserrichtung (8) ist, sodass eine Streifenebene (9) der jeweiligen Holzlage (3) normal zu einer Lagenebene (4), in der sich die jeweilige Holzlage (3) erstreckt, ist, wobei sich die ersten Holzstreifen (5) und die zweiten Holzstreifen (7) parallel zu der Streifenebene (9) der jeweiligen Holzlage (3) erstrecken;
- Vorsehen der zumindest einen Holzlage (3) derart, dass die Lagenebene (4) der zumindest einen Holzlage (3) parallel zur Plattenebene (2) der herzustellenden Werkstoffplatte (1) ist,
**dadurch gekennzeichnet, dass**
das Abspalten zumindest einer Holzlage (3) von dem Stapel (18) das Abspalten einer ersten Holzlage (3a) der zumindest einen Holzlage (3) und einer zweiten Holzlage (3b) der zumindest einen Holzlage (3) umfasst;
wobei das Vorsehen der zumindest einen Holzlage (3) umfasst:
- Vorsehen der ersten Holzlage (3a) und der zweiten Holzlage (3b) derart, dass die jeweilige Lagenebene (4) parallel zur Plattenebene (2) der herzustellenden Werkstoffplatte (1) ist und dass die Streifenebene (9b) der zweiten Holzlage (3b) gegenüber der Streifenebene (9a) der ersten Holzlage (3a) gedreht ist,
- Verkleben der ersten Holzlage (3a) und der zweiten Holzlage (3b) an ihrer jeweiligen sich parallel zur Lagenebene (4) erstreckenden Oberfläche (12) miteinander.

14. Verfahren nach Anspruch 15, wobei die Streifenebene (9b) der zweiten Holzlage (3b) senkrecht zu der Streifenebene (9a) der ersten Holzlage (3a) ist.

15. Verfahren nach einem der Ansprüche 13 oder 14, wobei das Vorsehen des Stapels (18) von ersten und zweiten Holzstreifen (5, 7) umfasst: Stapeln von Furniersperrhölzern (20) senkrecht zu ihren Plattenoberflächen (21) und Verkleben und/oder Verpressen der Furniersperrhölzer (20) jeweils an ihren Plattenoberflächen (21).

## Claims

1. Material board (1) extending along a board plane (2), comprising at least one wood layer (3), wherein each of the at least one wood layer (3) extends in a layer plane (4) parallel to the board plane (2) and comprises first wood strips (5) having a first fiber direction (6) and second wood strips (7) having a second fiber direction (8), wherein the first wood strips (5) and the second wood strips (7) in the respective wood layer (3) extend parallel to a strip plane (9) of the respective wood layer (3) perpendicular to the layer plane (4), wherein the first fiber direction (6) is inclined relative to a normal to the layer plane (4) and the second fiber direction (7) is normal to the layer plane (4),
**characterized by**
a first wood layer (3a) of the at least one wood layer (3) and a second wood layer (3b) of the at least one wood layer (3), wherein the strip plane (9b) of the second wood layer (3b) is rotated relative to the strip plane (9a) of the first wood layer (3a) about an axis of rotation (11) perpendicular to the board plane (2).

2. Material board (1) according to claim 1, wherein the first fiber direction (6) is parallel to the layer plane (4) and/or wherein the first fiber direction (6) is parallel to the strip plane (9) of the respective wood layer (3).

3. Material board (1) according to any one of claims 1 or 2, wherein in each case one of the first wood strips (5) and one of the second wood strips (7) are provided alternately in a direction perpendicular to the strip plane (9) of the respective wood layer (3).

4. Material board (1) according to any one of claims 1 to 3, wherein the first wood strips (5) and the second wood strips (7) are veneer strips.

5. Material board (1) according to any one of claims 1 to 4, wherein at least one of the at least one wood layer (3) comprises at least one non-wood strip extending in the respective wood layer (3) parallel to the strip plane (9) of the respective wood layer (3) and comprising no wood material.

6. Material board (1) according to any one of claims 1 to 5, wherein adjacent strips of the first wood strips (5), of the second wood strips (7), and preferably of the at least one non-wood strip are bonded, in particular glued, and/or pressed to one another at their respective surfaces (10) extending parallel to the strip plane (9) of the respective wood layer (3).

7. Material board (1) according to any one of the preceding claims, wherein the strip plane (9b) of the second wood layer (3b) is perpendicular to the strip plane (9a) of the first wood layer (3a).

8. Material board (1) according to any one of the preceding claims, wherein at least one third wood layer (3c) of the at least one wood layer (3) is provided, wherein the second wood layer (3b) is provided between the first wood layer (3a) and the third wood layer (3c), and the strip plane (9c) of the third wood layer (3c) is parallel to the strip plane (9a) of the first wood layer (3a).

9. Material board (1) according to any one of the preceding claims, wherein adjacent wood layers (3) of the at least one wood layer (3) are bonded, in particular glued, and/or pressed to one another at their respective surfaces (12) extending parallel to the layer plane.

10. Material board (1) according to any one of the preceding claims, wherein an outer surface (13), extending parallel to the layer plane (4), of an outermost wood layer of the at least one wood layer (3) is impregnated.

11. Material board (1) according to any one of the preceding claims,
comprising two cover layers (14), which preferably comprise no wood material and between which the at least one wood layer (3) is provided, and/or
comprising at least one non-wood layer (25), wherein each of the at least one non-wood layer (25) extends in a layer plane parallel to the board plane.

12. Frame formwork element (15) comprising a frame (16) and a formwork panel (17), wherein the material board (1) according to any one of the preceding claims is provided as the formwork panel (17).

13. Method for producing a material board (1) extending along a board plane (2), comprising at least the steps of:
- providing a stack (18) of first wood strips (5) having a first fiber direction (6) and second wood strips (7) having a second fiber direction (8), each extending parallel to a strip plane (9) of the stack, wherein the second fiber direction (8) is parallel to the strip plane (9) of the stack and the first fiber direction (6) is arranged at an angle to the second fiber direction (8);
- splitting off at least one wood layer (3) from the stack (18), wherein separation from the stack (18) takes place along a separation plane (19) perpendicular to the strip plane (9) of the stack and perpendicular to the second fiber direction (8), such that a strip plane (9) of the respective wood layer (3) is normal to a layer plane (4) in which the respective wood layer (3) extends, wherein the first wood strips (5) and the second wood strips (7) extend parallel to the strip plane (9) of the respective wood layer (3);
- providing the at least one wood layer (3) such that the layer plane (4) of the at least one wood layer (3) is parallel to the board plane (2) of the material board (1) to be produced,
**characterized in that**
the splitting off of at least one wood layer (3) from the stack (18) comprises splitting off a first wood layer (3a) of the at least one wood layer (3) and a second wood layer (3b) of the at least one wood layer (3);
wherein the providing of the at least one wood layer (3) comprises:
- providing the first wood layer (3a) and the second wood layer (3b) such that the respective layer plane (4) is parallel to the board plane (2) of the material board (1) to be produced, and that the strip plane (9b) of the second wood layer (3b) is rotated relative to the strip plane (9a) of the first wood layer (3a),
- bonding the first wood layer (3a) and the second wood layer (3b) to one another at their respective surface (12) extending parallel to the layer plane (4).

14. Method according to claim 15, wherein the strip plane (9b) of the second wood layer (3b) is perpendicular to the strip plane (9a) of the first wood layer (3a).

15. Method according to any one of claims 13 or 14, wherein the providing of the stack (18) of first and second wood strips (5, 7) comprises: stacking veneer plywoods (20) perpendicular to their panel surfaces (21) and bonding and/or pressing the veneer plywoods (20) in each case at their panel surfaces (21).

## Revendications

1. Panneau de matériau (1) s'étendant le long d'un plan de panneau (2), comprenant au moins une couche de bois (3), dans lequel chaque couche de bois parmi l'au moins une couche de bois (3) s'étend dans un plan de couche (4) parallèle au plan de panneau (2) et comprend de premières bandes de bois (5) présentant une première direction de fibres (6) et de deuxièmes bandes de bois (7) présentant une deuxième direction de fibres (8), dans lequel les premières bandes de bois (5) et les deuxièmes bandes de bois (7) s'étendent dans la couche de bois (3) respective parallèlement à un plan de bandes (9) de la couche de bois (3) respective perpendiculaire au plan de couche (4), dans lequel la première direction de fibres (6) est inclinée par rapport à une normale au plan de couche (4) et la deuxième direction de fibres (7) est normale au plan de couche (4),
**caractérisé par**
une première couche de bois (3a) de l'au moins une couche de bois (3) et une deuxième couche de bois (3b) de l'au moins une couche de bois (3), dans lequel le plan de bandes (9b) de la deuxième couche de bois (3b) est tourné par rapport au plan de bandes (9a) de la première couche de bois (3a) autour d'un axe de rotation (11) perpendiculaire au plan de panneau (2).

2. Panneau de matériau (1) selon la revendication 1, dans lequel la première direction de fibres (6) est parallèle au plan de couche (4) et/ou dans lequel la première direction de fibres (6) est parallèle au plan de bandes (9) de la couche de bois (3) respective.

3. Panneau de matériau (1) selon l'une quelconque des revendications 1 ou 2, dans lequel respectivement l'une des premières bandes de bois (5) et l'une des deuxièmes bandes de bois (7) sont prévues en alternance dans une direction perpendiculaire au plan de bandes (9) de la couche de bois (3) respective.

4. Panneau de matériau (1) selon l'une quelconque des revendications 1 à 3, dans lequel les premières bandes de bois (5) et les deuxièmes bandes de bois (7) sont des bandes de placage.

5. Panneau de matériau (1) selon l'une quelconque des revendications 1 à 4, dans lequel au moins une couche de bois parmi l'au moins une couche de bois (3) comprend au moins une bande non en bois, qui s'étend dans la couche de bois (3) respective parallèlement au plan de bandes (9) de la couche de bois (3) respective et qui ne comprend pas de matériau en bois.

6. Panneau de matériau (1) selon l'une quelconque des revendications 1 à 5, dans lequel des bandes adjacentes des premières bandes de bois (5), des deuxièmes bandes de bois (7) et de préférence de l'au moins une bande non en bois sont respectivement collées, en particulier encollées, et/ou pressées les unes aux autres au niveau de leurs surfaces (10) s'étendant parallèlement au plan de bandes (9) de la couche de bois (3) respective.

7. Panneau de matériau (1) selon l'une quelconque des revendications précédentes, dans lequel le plan de bandes (9b) de la deuxième couche de bois (3b) est perpendiculaire au plan de bandes (9a) de la première couche de bois (3a).

8. Panneau de matériau (1) selon l'une quelconque des revendications précédentes, dans lequel au moins une troisième couche de bois (3c) de l'au moins une couche de bois (3) est prévue, dans lequel la deuxième couche de bois (3b) est prévue entre la première couche de bois (3a) et la troisième couche de bois (3c), et le plan de bandes (9c) de la troisième couche de bois (3c) est parallèle au plan de bandes (9a) de la première couche de bois (3a).

9. Panneau de matériau (1) selon l'une quelconque des revendications précédentes, dans lequel des couches de bois (3) adjacentes de l'au moins une couche de bois (3) sont respectivement collées, en particulier encollées, et/ou pressées les unes aux autres au niveau de leurs surfaces (12) s'étendant parallèlement au plan de couche.

10. Panneau de matériau (1) selon l'une quelconque des revendications précédentes, dans lequel une surface extérieure (13), s'étendant parallèlement au plan de couche (4), d'une couche de bois la plus extérieure de l'au moins une couche de bois (3) est imprégnée.

11. Panneau de matériau (1) selon l'une quelconque des revendications précédentes,
comprenant deux couches de couverture (14), qui ne comprennent de préférence pas de matériau en bois et entre lesquelles l'au moins une couche de bois (3) est prévue, et/ou
comprenant au moins une couche non en bois (25), dans lequel chaque couche non en bois parmi l'au moins une couche non en bois (25) s'étend dans un plan de couche parallèle au plan de panneau.

12. Élément de coffrage à cadre (15) comprenant un cadre (16) et un panneau de coffrage (17), dans lequel le panneau de matériau (1) selon l'une quelconque des revendications précédentes est prévu en tant que panneau de coffrage (17).

13. Procédé de fabrication d'un panneau de matériau (1) s'étendant le long d'un plan de panneau (2), comprenant au moins les étapes consistant à :
- prévoir une pile (18) de premières bandes de bois (5) présentant une première direction de fibres (6) et de deuxièmes bandes de bois (7) présentant une deuxième direction de fibres (8), s'étendant chacune parallèlement à un plan de bandes (9) de la pile, dans lequel la deuxième direction de fibres (8) est parallèle au plan de bandes (9) de la pile et la première direction de fibres (6) est disposée de manière angulaire par rapport à la deuxième direction de fibres (8) ;
- séparer par refendage au moins une couche de bois (3) de la pile (18), dans lequel une séparation de la pile (18) s'effectue le long d'un plan de séparation (19) qui est perpendiculaire au plan de bandes (9) de la pile et perpendiculaire à la deuxième direction de fibres (8), de telle sorte qu'un plan de bandes (9) de la couche de bois (3) respective soit normal à un plan de couche (4) dans lequel s'étend la couche de bois (3) respective, dans lequel les premières bandes de bois (5) et les deuxièmes bandes de bois (7) s'étendent parallèlement au plan de bandes (9) de la couche de bois (3) respective ;
- prévoir l'au moins une couche de bois (3) de telle sorte que le plan de couche (4) de l'au moins une couche de bois (3) soit parallèle au plan de panneau (2) du panneau de matériau (1) à fabriquer,
**caractérisé en ce que**
la séparation par refendage d'au moins une couche de bois (3) de la pile (18) comprend la séparation par refendage d'une première couche de bois (3a) de l'au moins une couche de bois (3) et d'une deuxième couche de bois (3b) de l'au moins une couche de bois (3) ;
dans lequel le fait de prévoir l'au moins une couche de bois (3) comprend :
- prévoir la première couche de bois (3a) et la deuxième couche de bois (3b) de telle sorte que le plan de couche (4) respectif soit parallèle au plan de panneau (2) du panneau de matériau (1) à fabriquer et que le plan de bandes (9b) de la deuxième couche de bois (3b) soit tourné par rapport au plan de bandes (9a) de la première couche de bois (3a),
- coller la première couche de bois (3a) et la deuxième couche de bois (3b) l'une à l'autre au niveau de leur surface (12) respective s'étendant parallèlement au plan de couche (4).

14. Procédé selon la revendication 15, dans lequel le plan de bandes (9b) de la deuxième couche de bois (3b) est perpendiculaire au plan de bandes (9a) de la première couche de bois (3a).

15. Procédé selon l'une quelconque des revendications 13 ou 14, dans lequel le fait de prévoir la pile (18) de premières et deuxièmes bandes de bois (5, 7) comprend : empiler des contreplaqués de placage (20) perpendiculairement à leurs surfaces de panneau (21) et coller et/ou presser les contreplaqués de placage (20) respectivement au niveau de leurs surfaces de panneau (21).
